# EUROPÄISCHE PATENTSCHRIFT

(11) **EP 3 351 790 B1**
(45) Veröffentlichungstag und Bekanntmachung des Hinweises auf die Patenterteilung: **12.08.2020**
(21) Anmeldenummer: 17152453.1
(22) Anmeldetag: 20.01.2017
(51) Int. Cl.: F03D 13/10, F03D 13/40

(54) **ZUGMANSCHETTE FÜR ROTORBLÄTTER VON WINDENERGIEANLAGEN**
TRACTION SLEEVE FOR ROTOR BLADES OF WIND TURBINES
MANCHETTE DE TRACTION POUR PALES DE ROTOR D'ÉOLIENNES

(43) Veröffentlichungstag der Anmeldung: 25.07.2018
(73) Patentinhaber: Senvion GmbH, 22297 Hamburg (DE)
(72) Erfinder: Kleinwort, Finn, 23730 Schashagen (DE)
(74) Vertreter: Glawe, Delfs, Moll

(56) Entgegenhaltungen:
- EP-A1- 2 562 418
- EP-B1- 2 562 124
- CN-B- 103 174 601

## Beschreibung

Die Erfindung betrifft eine Zugmanschette für Rotorblätter von Windenergieanlagen sowie ein Verfahren zu deren Verwendung.

Windenergieanlagen sind aus dem Stand der Technik bekannt. Sie umfassen in der Regel einen Rotor, der drehbar an einer Gondel angeordnet ist, wobei die Gondel wiederum drehbar auf einem Turm angeordnet ist. Der Rotor treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren - je nach Bauart des Generators auch wenigstens teilweise direkt - in ein elektrisches Netz eingespeist werden kann. Der Rotor umfasst mehrere (in der Regel drei), sich im Wesentlichen radial von der Rotorachse erstreckende Rotorblätter, die gegenüber einer Rotornabe drehbar befestigt sind, um den Anstellwinkel der Rotorblätter einzustellen.

Bei der Errichtung von Windenergieanlagen wird - je nach Konzept - der Rotor zunächst am Boden vormontiert, wobei die Rotorblätter mit der Rotornabe zur Bildung eines Rotorstern verbunden werden, bevor der Rotorstern als solches mithilfe eines Krans zur bereits auf dem Turm befindlichen Gondel gehoben und dort an die Rotorwelle angebunden wird. Alternativ ist es bekannt, die Rotorblätter einzeln mit einem Kran zur Gondel zu heben und dort an einer bereits montierten Rotornabe zu befestigen.

Während ein Rotorstern oder ein einzelnes Rotorblatt zur Montage an einem Kran hängt, wirken bereits Windkräfte auf den Rotorstern oder das Rotorblatt, die unerwünschte Pendelschwingungen verursachen können. Um diesen Windkräften entgegenzuwirken, ist es bekannt, an dem Rotorstern bzw. dem Rotorblatt Führungsseile zu befestigten, über die mit Hilfe von Windensystemen oder manuell Kräfte ausgeübt werden können, um die Windkräfte auszugleichen.

Zur Befestigung der Führungsseile an einem Rotorblatt eines Rotorsterns oder eines einzeln zu montierenden Rotorblatts sind im Stand der Technik verschiedene Methoden bekannt.

So ist bekannt im Rotorblatt selbst ein Loch als Durchführung für ein Führungsseil vorzusehen. Allerdings verbleibt das Loch nach entfernen des Führungsseils im Rotorblatt, was nachteilig für dessen Aerodynamik ist, oder es muss nach erfolgter Montage des Rotorblatts - also regelmäßig in großer Höhe - verschlossen werden.

Außerdem sind sog. Blatttaschen bekannt, bspw. aus der EP 2 562 418 A1. Blatttaschen sind in der Regel aus flexiblem Material mit einem daran befestigten Führungsseil. Sie werden über die Blattspitze eines Rotorblatts gestülpt und dort häufig durch Spanngurte gesichert, sodass über das Führungsseil Kräfte auf das Rotorblatt ausgeübt werden können - allerdings im Regelfall nur solange die Kräfte die Blatttasche nicht von der Blattspitze herunterziehen.

CN 103174601 B offenbart eine vom Blatt lösbare Blatttasche mit Halteseil, wobei die Blatttasche mittels eines Positionierungsstreifens mit dem Blatt lösbar verbunden ist. Zum Lösen der Blatttasche wird der Positionierungsstreifen mittels separatem Löseseil vom Blatt sowie von der Blatttasche gelöst, woraufhin sich die Blatttasche mit dem Halteseil abnehmen lässt. Z

Nachteilig an entsprechenden Blatttaschen ist ihre zwingende Anordnung an der Blattspitze eines Rotorblatts, die insbesondere bei einer Rotorsternmontage großer Windenergieanlagen zu ungünstigen geometrischen Verhältnissen für die Kraftleinleitung führen kann. Wird bei großen Windenergieanlagen der Rotorstern als Ganzes montiert, gelangt zumindest eine der Rotorblattspitzen in große Höhen. Um dennoch zum Ausgleich von Windkräften über das Führungsseil einer Blatttasche gut horizontale Kräfte auf ein solches Rotorblatt aufbringen zu können, müsste das dazugehörige Windensystem bzw. die ziehenden Personen in einer größeren Entfernung angeordnet bzw. positioniert sein. Entsprechendes lässt sich aufgrund der örtlichen Gegebenheiten am Aufstellort einer Windenergieanlage sowohl On-Shore als auch Off-Shore häufig jedoch nicht realisieren. Auch ist die Demontage der Blatttaschen nach erfolgter Montage des Rotorsterns oder eines einzelnen Rotorblatts häufig aufwändig und in großer Höhe durchzuführen.

Aus der EP 2 562 124 B1 ist außerdem ein Hubsystem mit einer zum Umfassen eines Rotorblatts vorgesehenen Schlinge offenbart, wobei die Schlinge ein Schnelllösesystem aufweist, mit dem sie ferngesteuert geöffnet werden kann, um das Rotorblatt freizugeben. Dieses System erfordert zur Betätigung des Schnelllösesystems neben einem Führungs- bzw. Kranseil jedoch entweder ein zweites Steuerseil oder eine funkferngesteuerte, in die Schlinge integrierte Einheit zum Auftrennen der Schlinge. Eine entsprechende Vorrichtung ist aufwändig in ihrer Verwendung.

Ausgehend von diesem Stand der Technik liegt der Erfindung die Aufgabe zugrunde, eine Vorrichtung zum Ausgleichen von Windkräften auf ein Rotorblatt zu schaffen, bei dem die aus dem Stand der Technik bekannten Nachteile nicht mehr oder zumindest nur noch in begrenztem Umfang auftreten.

Gelöst wird diese Aufgabe durch eine Zugmanschette gemäß dem Hauptanspruch sowie ein Verfahren zu deren Verwendung gemäß dem nebengeordneten Anspruch 8. Vorteilhafte Weiterbildungen sind Gegenstand der abhängigen Ansprüche.

Demnach betrifft die Erfindung eine Zugmanschette für Rotorblätter einer Windenergieanlage mit einem flexiblen Manschettenband zum Umwickeln eines Rotorblatts mit einer Innenseite und einer Außenseite, wobei das Manschettenband an seinem zweiten Ende eine Führungsleine und an seinem ersten Ende auf der Außenseite ein Verschlusselement aufweist, welches mit der Innenseite des Manschettenbandes bei einer Überlappung an seinem ersten Ende eine lösbare Verbindung bildet, deren Scherfestigkeit um wenigstens eine Größenordnung höher ist als ihre Haftzugfestigkeit.

Die Erfindung betrifft weiterhin ein Verfahren zur Verwendung einer erfindungsgemäßen Zugmanschette, wobei
- die Zugmanschette derart an dem Rotorblatt einer Windenergieanlage befestigt ist, dass die lösbare Verbindung im Bereich der Vorderkante des Rotorblatts angeordnet ist;
- zum Aufbringen von Kräften auf das Rotorblatt über die Führungsleine Zugkräfte bis zu einer vorgegebenen maximalen Zugkraft nur in eine Zugrichtung innerhalb eines vorgegebenen Betriebswinkelbereichs gegenüber der Profilsehne des Rotorblatts aufgebracht werden, in der die, durch die bei dieser Zugrichtung die lösbare Verbindung bildenden Bereiche des Verschlusselements erreichte Scherfestigkeit größer ist als die maximale Zugkraft; und
- zum Lösen der Zugmanschette vom Rotorblatt über die Führungsleine eine Zugkraft kleiner als die vorgegebene maximale Zugkraft in eine Zugrichtung außerhalb des vorgegebenen Betriebswinkelbereichs aufgebracht wird, sodass die Haftzugfestigkeit zumindest des der Führungsleine nächstliegenden Bereichs der lösbaren Verbindung überschritten wird.

Zunächst werden einige in Zusammenhang mit der vorliegenden Erfindung verwendete Begriffe erläutert.

Bei einer "Zugmanschette" handelt es sich um eine Manschette, die sich in Form einer Ummantelung um eine Objekt, hier ein Rotorblatt, legen lässt, mit einem Anbindungspunkt, über den wenigstens Zugkräfte auf die Manschette und das davon ummantelte Objekt aufgebracht werden können.

Mit "Scherfestigkeit" ist der Widerstand der lösbaren Verbindung gegenüber tangential zur Verbindungsfläche wirkenden Scherkräften bezeichnet. "Haftzugfestigkeit" bezeichnet den Widerstand der lösbaren Verbindung gegenüber senkrecht zur Verbindungsfläche wirkenden Zugkräften. Sie kann auch als "Stirnabreißfestigkeit" bezeichnet werden. Die Scherfestigkeit ist um wenigstens eine Größenordnung höher als die Haftzugfestigkeit, wenn sie wenigstens um den Faktor 10 größer ist. Zur Bestimmung der Scherfestigkeit und der Haftzugfestigkeit bzw. Stirnabreißfestigkeit kann auf ein beliebiges normiertes Prüfverfahren zurückgegriffen werden.

Die erfindungsgemäße Zugmanschette zeichnet sich dadurch aus, dass sie sich grundsätzlich an einer beliebigen Position entlang der Blattlänge an einem Rotorblatt befestigen lässt, indem sie um das Rotorblatt geschlungen wird. Insbesondere muss sie nicht an der Blattspitze des Rotorblatts angeordnet werden. Es ist sogar bevorzugt, wenn dies nicht der Fall ist, da so unnötige Belastungen der Blattspitze vermieden werden können. Es ist daher bevorzugt, wenn die erfindungsgemäße Zugmanschette ausgehend von der Blattwurzel nur in den ersten 90% der Blattlänge eines Rotorblattes an diesem angeordnet wird.

Indem das Manschettenband der Zugmanschette an seinem ersten Ende an der Außenseite ein Verschlusselement aufweist, kann sie einfach an einem Rotorblatt befestigt werden. Dazu wird das Manschettenband zunächst mit seinem ersten Ende an das Rotorblatt angelegt und das zweite Ende um das Rotorblatt geschlungen. Anschließend wird der um das Rotorblatt herumgeführte Teil des Manschettenbandes in Überlappung mit dem Verschlusselement gebracht, wodurch eine lösbare Verbindung geschaffen und das Manschettenband bzw. die Zugmanschette geschlossen wird.

Das zweite Ende des Manschettenbandes bildet den Anbindungspunkt der Zugmanschette zur Aufbringung von Zugkräften, wobei dieses Ende insbesondere auch über den Bereich der lösbaren Verbindung hinausragen kann. An dem zweiten Ende ist entsprechend eine Führungsleine zur Aufbringung von Zugkräften auf die Zugmanschette befestigt. Die Führungsleine kann dabei fest oder lösbar an dem Manschettenband angebunden sein. Ist die Anbindung lösbar, kann sich dadurch die Anbringung des Manschettenbandes an einem Rotorblatt erleichtern, da die Führungsleine mit dem Manschettenband erst nach erfolgter Anbringung desselben an einem Rotorblatt angebunden werden kann, sodass die Führungsleine vorher nicht stört.

Über die erfindungsgemäße Zugmanschette können Zugkräfte auf ein Rotorblatt, um welches die Zugmanschette gelegt ist, aufgebracht werden. Die maximale Zugkraft, die dabei aufgebracht werden kann ohne die Verbindung zu lösen, ergibt sich aus der Scher- und der Haftzugfestigkeit der lösbaren Verbindung sowie der Zugrichtung, in welche die Zugkraft aufgebracht wird. Je nach Zugrichtung der Zugkraft kommt im Bereich der lösbaren Verbindung nämlich die Scher- oder die Haftzugfestigkeit des Verschlusselementes zum Tragen.

Es ist bevorzugt, wenn das Verschlusselement ein flächiges Verschlusselement ist. Ein Verschlusselement gilt dann als flächig im Sinne der Erfindung, wenn es eine zweidimensionale Ausdehnung aufweist, die es ermöglicht, dass in sämtliche Richtungen entlang der Oberfläche des Verschlusselementes in einem Bereich des Verschlusselementes eine lösbare Verbindung hergestellt ist, während in einem benachbarten Bereich entlang dieser Richtung keine lösbare Verbindung besteht. Es ist bevorzugt, wenn sich das Verschlusselement im Wesentlichen über die gesamte Breite des Manschettenbandes erstreckt und in einer Richtung senkrecht dazu eine Länge von wenigstens 10 cm, vorzugweise wenigstens 30 cm, weiter vorzugsweise wenigstens 50 cm aufweist.

Es ist bevorzugt, wenn das Verschlusselement ein Klettelement zur Bildung eines Klettverschlusses, ein Magnetelement zur Bildung eines Magnetverschlusses und/oder eine Klebefläche aufweist. Die Innenseite des Manschettenbandes ist dann in dem zur Überlappung mit dem Verschlusselement vorgesehenen Bereich in Abhängigkeit der Art des Verschlusselementes geeignet ausgebildet, um die vorgesehene lösbare Verbindung tatsächlich zu erreichen. Ist das Verschlusselement ein Klettelement, ist in dem fraglichen Bereich an der Innenseite des Manschettenbandes also bspw. ein entsprechendes, zur Bildung eines Klettverschlusses geeignetes Gegenstück vorzusehen. Im Falle eines Magnetelementes als Verschlusselement muss das Manschettenband im fraglichen Bereich magnetisierbar oder selbst magnetisch sein. Ist als Verschlusselement eine Klebefläche vorgesehen, ist auch an der Innenseite des Manschettenbandes eine entsprechende zum Kleben geeignete Fläche vorzusehen.

Es ist bevorzugt, wenn die Innenseite des Manschettenbandes in den zur Anlage an das Rotorblatt vorgesehenen Bereichen wenigstens teilweise rutschhemmend ausgeführt ist. Dadurch wird sichergestellt, dass die Zugmanschette auch dann nicht über die Oberfläche des Rotorblattes rutscht, wenn über die Führungsleine eine Zugkraft auf die Zugmanschette ausgeübt wird. Die Rutschhemmung ist dabei vorzugsweise sowohl in Richtung der Rotorblattachse als auch in Umfangrichtung der Zugmanschette vorgesehen. Die Rutschhemmung kann durch eine geeignete Oberfläche oder Oberflächenbeschichtung der Innenseite erreicht werden, bspw. durch Gummierung.

Alternativ oder zusätzlich zu einer rutschhemmenden Ausführung können an der Innenseite des Manschettenbandes auch ein oder mehrere Saugnäpfe vorgesehen sein. Über entsprechende Saugnäpfe lässt sich das Manschettenband bzw. die Zugmanschette lösbar an der glatten Oberfläche eines Rotorblattes befestigen.

Es ist weiterhin bevorzugt, wenn die Zugmanschette ein quer zur Längsrichtung des Manschettenbandes angeordnetes rinnenförmiges Element zum Aufschieben auf die Hinterkante eines Rotorblatts aufweist, welches derart vom ersten Ende des Manschettenbandes entfernt an dem Manschettenband angeordnet ist, dass das erste Ende des Manschettenbandes beim Umwickeln eines Rotorblatts mit auf die Hinterkante des Rotorblattes aufgesteckten Rinnenelement im Bereich der Vorderkante des Rotorblatts angeordnet ist. Über das rinnenförmige Element kann die Position des Verschlusselementes an dem Rotorblatt festgelegt werden. Da bei der erfindungsgemäßen Zugmanschette durch die Führungsleine eingebrachte Zugkräfte zu einem erheblichen Teil über den Bereich der lösbaren Verbindung von der Zugmanschette auf das Rotorblatt übertragen werden, ist es vorteilhaft, wenn dieser Bereich an der stabilen Vorderkante des Rotorblatts anliegt. Darüber hinaus bietet die Vorderkante des Rotorblatts im Falle eines flächigen Verschlusselementes aufgrund ihres vergleichsweise geringen Nasenradius den Vorteil, dass die Zugrichtung der Zugkraft über einen großen Winkelbereich gegenüber der Profilsehne des Rotorblatts variiert werden kann, in dem die maximal zulässige Zugkraft durch die Scherfestigkeit der lösbaren Verbindung bestimmt wird. Das rinnenförmige Element ist dabei vorzugsweise zum kraftschlussfreien Aufschieben auf die Hinterkante des Rotorblattes ausgebildet, d.h. zwischen dem aufgeschobenen rinnenförmigen Element und der Hinterkante des Rotorblatts besteht kein Kraftschluss.

Das Manschettenband kann aus gewebeverstärkter Plane, Folie, Leder, Segeltuch oder einer Kombination dieser Materialen sein und ist vorzugsweise mit Gurten aus textilen Werkstoffen, Verbundwerkstoffen oder Metall verstärkt.

Bei der Verwendung der erfindungsgemäßen Zugmanschette ist - wie bereits erwähnt - bevorzugt, wenn die Zugmanschette derart an dem Rotorblatt einer Windenergieanlage befestigt ist, dass die lösbare Verbindung im Bereich der Vorderkante des Rotorblatts angeordnet ist.

Es kann dann gegenüber der Profilsehne des Rotorblatts ein Betriebswinkelbereich für die Zugrichtung der Aufbringung der Zugkraft bestimmt werden, in dem bei Aufbringen einer Kraft kleiner einer vorgegebenen maximalen Zugkraft die lösbare Verbindung aufgrund ihrer Scherfestigkeit bestehen bleibt. Dabei ist es nicht erforderlich, dass die Verbindung dauerhaft über die gesamte mögliche Verbindungsfläche bzw. die gesamte Fläche des Verbindungselementes bestehen bleibt. Vielmehr ist es auch möglich, dass sich die tatsächliche Verbindungsfläche in Abhängigkeit der Zugrichtung und der Zugkraft verändert, bspw. weil ein Teil der Verbindung aufgrund der aufgebrachten Zugkraft gelöst wird, wobei jedoch der bestehenbleibende Teil der Verbindung der Zugkraft standhält.

Erst zum Lösen der Zugmanschette wird eine Zugkraft auf die Zugmanschette ausgeübt, mit der zumindest der Bereich der lösbaren Verbindung, welcher der Führungsleine am nächsten ist, gelöst wird, insbesondere indem eine Zugkraft in eine Zugrichtung außerhalb des vorgegebenen Betriebswinkelbereichs über die Führungsleine aufgebracht wird, mit der die Haftzugfestigkeit der Verbindung in eben diesem Bereich überschritten wird. Die Verbindung wird dadurch nach dem Prinzip des Abziehens eines Klebestreifens gelöst. Es ist dazu ggf. erforderlich die Zugrichtung, in die die Zugkraft aufgebracht wird, in Abhängigkeit des Fortschritts des Lösens zu verändern.

Um sowohl eine initiale Zugrichtung außerhalb des Betriebswinkelbereichs als auch das ggf. erforderliche Verändern der Zugrichtung während des Lösens der lösbaren Verbindung zu erreichen ist bevorzugt, wenn der Einstellwinkel des Rotorblatts verstellt wird. Moderne Windenergieanlagen verfügen in der Regel über Rotorblätter, deren Blatteinstellwinkel mit Hilfe von Pitch-Motoren verändert werden kann. Durch eine Veränderung des Blatteinstellwinkels lässt sich auch die Zugrichtung der Führungsleine gegenüber der Zugmanschette verändern, ohne dass dazu die Führungsleine oder eine am andern Ende der Führungsleine vorgesehene Windenvorrichtung bewegt werden müsste. Die erfindungsgemäße Zugmanschette wird bei dieser bevorzugten Weiterbildung des erfindungsgemäßen Verfahrens also bildlich gesprochen von dem Rotorblatt "abgewickelt". Durch das Abwickeln der Zugmanschette vom Rotorblatt in eine Richtung senkrecht zur Längsachse des Rotorblatts wird die Gefahr minimiert, dass die Zugmanschette beim Abziehen in Richtung der Längsachse des Rotorblatts verrutscht und dadurch am Rotorblatt montierte aerodynamische Anbauteile beschädigt werden oder sich die Zugmanschette darin verhakt.

Es ist weiter bevorzugt, wenn der Betriebswinkelbereichs derart vorgegeben ist, dass bei aufbringen einer Zugkraft über die Führungsleine in Bereiche des Verschlusselementes eine Klemmwirkung zwischen dem Rotorblatt und dem das Verschlusselement überlappenden Bereichs des Manschettenbandes ergibt. In anderen Worten soll der Betriebswinkelbereich also so gewählt werden, dass auf das bereits zwischen dem Manschettenband und der Oberfläche des Rotorblattes angeordnete Verschlusselement eine zusätzliche Klemmung ausgeübt wird, die durch die über die Führungsleine aufgebrachte Zugkraft erzeugt wird.

Wie bereits erwähnt, ist es bevorzugt, wenn die erfindungsgemäße Zugmanschette ausgehend von der Blattwurzel nur in den ersten 90% der Blattlänge eines Rotorblattes an diesem angeordnet wird. Auch ist bevorzugt, wenn die Zugmanschette (1) in einem Bereich des Rotorblattes (20) angeordnet ist, der frei von aerodynamischen Anbauteilen an der Rotorblattoberfläche ist. Dadurch können evtl. Beschädigungen an den aerodynamischen Anbauteilen vermieden werden.

Die Erfindung wird durch anhand vorteilhafter Ausführungsformen unter Bezugnahme auf die beigefügten Zeichnungen beispielhaft beschrieben. Es zeigen:
- Figur 1:: eine schematische Darstellung eines ersten Ausführungsbeispiels einer erfindungsgemäßen Zugmanschette; und
- Figur 2:: eine schematische Schnittansicht durch die an einem Rotorblatt befestigte Zugmanschette gemäß Figur 1.

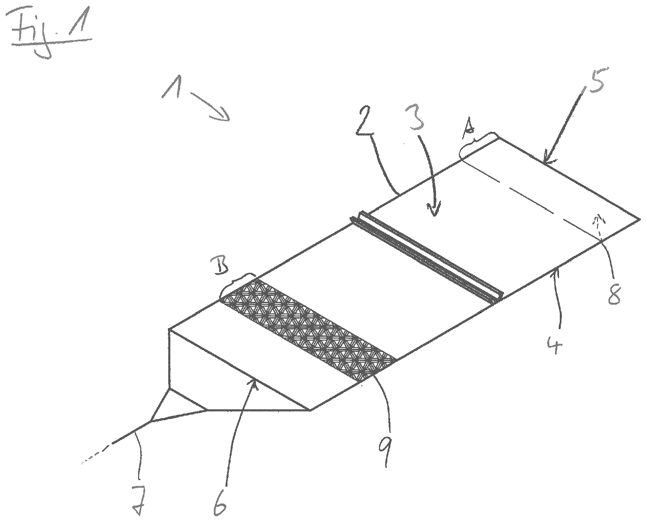

In Figur 1 ist ein erstes Ausführungsbeispiel einer erfindungsgemäßen Zugmanschette 1 dargestellt. Die Zugmanschette 1 umfasst ein flexibles Manschettenband 2 aus gewebeverstärkter Plane mit einer Innenseite 3 und einer (in Figur 1 nicht einsehbaren) Außenseite 4. An dem zweiten Ende 6 des Manschettenbandes 2 ist eine Führungsleine 7 lösbar befestigt, wobei die Führungsleine 7 in Figur 1 lediglich angedeutet ist.

An dem ersten Ende 5 des Manschettenbandes 2 weist die Außenseite 4 ein Verschlusselement 8 auf, welches sich flächig über die gesamte Breite und den Längenabschnitt A des Manschettenbandes 2 erstreckt. Das Verschlusselement 8 ist dabei ein Klettelement zur Bildung eines Klettverschlusses. Bei einem Klettverschluss ist die Scherfestigkeit regelmäßig um wenigstens eine Größenordnung höher als die Haftzugfestigkeit bzw. Stirnabreißfestigkeit.

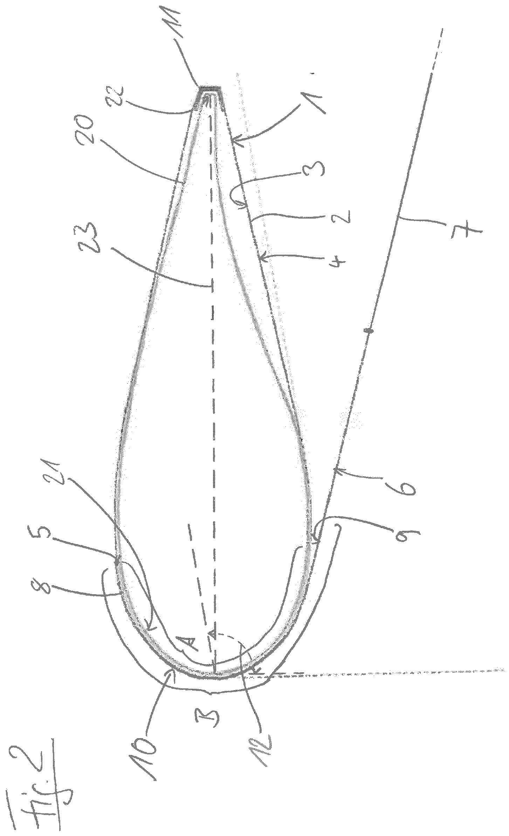

Damit das Verschlusselement 8 zusammen mit einem dieses Element 8 überlappenden Bereichs der Innenseite 3 des Manschettenbandes 2 einen lösbaren Verschluss 10 bilden kann (vgl. Figur 2), ist an der Innenseite 3 in einem Bereich B ein zu dem Klettelement des Verschlusselementes 8 passendes Gegenstück 9 angeordnet. In den übrigen Bereichen ist die Innenseite 3 des Manschettenbandes 2 gummiert und somit rutschhemmend ausgebildet. Zusätzlich kann die Innenseite 3 des Manschettenbandes 2 auch mit Saugnäpfen versehen sein (nicht dargestellt).

An der Innenseite 3 des Manschettenbandes 2 ist weiterhin noch ein quer zur Längsrichtung des Manschettenbandes 2 angeordnetes Rinnenelement 11 vorgesehen. Dieses Rinnenelement 11 lässt sich auf die Hinterkante 22 eines Rotorblatts 20 aufschieben und ist derart von dem ersten Ende 5 des Manschettenbandes entfernt, dass das Verschlusselement 8 bei aufgeschobenen Rinnenelement 11 in Bereich der Vorderkante 21 des Rotorblatts 20 angeordnet ist (vgl. Figur 2).

In Figur 2 ist schematisch ein Schnitt durch eine Anordnung dargestellt, bei der die Zugmanschette 1 gemäß Figur 1 an einem Rotorblatt 20 befestigt ist. In der Schnittansicht sind Vorder- 21 und Hinterkante 22 des Rotorblatts 20 ersichtlich. Ebenfalls in Figur 2 eingezeichnet ist die Profilsehne 23 des Rotorblatts 20.

Bei der Anordnung ist das Rinnenelement 11 der Zugmanschette 1 auf die Hinterkante 22 des Rotorblatts 20 aufgesteckt und das Manschettenband 2 zunächst mit seinem ersten Ende 5 um das Rotorblatt 20. Aufgrund der vorbeschriebenen Anordnung des Rinnenelementes 11 gegenüber dem ersten Ende 5 ist sichergestellt, dass das Verschlusselement 8 im Bereich der Vorderkante 21 des Rotorblattes 20 anliegt. Anschließend ist auch das zweite Ende 6 um das Rotorblatt 20 herumgeführt worden, sodass der Bereich B auf der Innenseite 3 des Manschettenbandes mit dem Verschlusselement 8 überlappt und so eine lösbare Verbindung 10 - nämlich eine Klettverbindung - bildet. Sowohl durch die rutschhemmende Beschichtung der Innenseite 3 als auch aufgrund des Rinnenelementes 11 ist sichergestellt, dass auch bei Aufbringen einer Zugkraft am zweiten Ende 6 des Manschettenbandes 2 über die Führungsleine 7 die Zugmanschette 1 gegenüber dem Rotorblatt 20 nicht verrutscht.

Gegenüber der Profilsehne 23 ist ein Betriebswinkelbereich 12 definiert. Wird bis zu einer vorgegebenen maximalen Zugkraft in eine Richtung an der Führungsleine 7 gezogen, die innerhalb dieses Betriebswinkelbereichs 12 liegt, ist die Scherfestigkeit des lösbaren Verschlusses 10 über die tatsächlich den Verschluss 10 bildende Fläche größer als die maximale Zugkraft. Betriebswinkelbereich und maximale Zugkraft können in Abhängigkeit von den Eigenschaften der lösbaren Verbindung definiert werden. Dabei ist zu beachten, dass die tatsächlich die lösbare Verbindung 10 bildende Kontaktfläche zwischen Verschlusselement 8 und dem entsprechenden Gegenstück 9 in Abhängigkeit der Zugrichtung variieren kann. So wird ausgehend von Figur 2 bspw. bei einer Zugrichtung senkrecht zur Profilsehne 23, aber immer noch innerhalb des Betriebswinkelbereichs 12 der lösbare Verschluss 10 bis zur Profilsehne 23 lösen, sodass der lösbare Verschluss 10 lediglich oberhalb der Profilsehne 23 bestehen bleibt.

Zum Lösen der Zugmanschette 1 ist vorgesehen, eine Zugkraft unterhalb der maximalen Zugkraft, jedoch in eine Richtung außerhalb des Betriebswinkelbereichs 12 über die Führungsleine 7 aufzubringen, sodass der lösbare Verschluss ähnlich dem des Abziehens eines Klebestreifens von einer Fläche gelöst wird. Dies ist möglich, da erfindungsgemäß die Haftzugfestigkeit der lösbaren Verbindung deutlich geringer ist als deren Scherfestigkeit.

Um eine Zugrichtung außerhalb des Betriebswinkelbereichs 12 zu erreichen kann entweder die Lage der Führungsleine 7 entsprechend verändert werden oder das Rotorblatt 20 wird mithilfe des regelmäßig vorgesehenen Antriebs zur Verstellung des Blatteinstellwinkel derart um seine Längsachse gedreht, dass eine zuvor im Betriebswinkelbereich 12 befindliche Zugrichtung nicht mehr im Betriebswinkelbereich 12 liegt. Die Blattwinkelverstellung kann auch entsprechend eingesetzt werden, falls während des Lösens der Verbindung 10 eine Veränderung der Zugrichtung erforderlich ist.

## Patentansprüche

1. Zugmanschette (1) für Rotorblätter (20) einer Windenergieanlage mit einem flexiblen Manschettenband (2) zum Umwickeln eines Rotorblatts (20) mit einer Innenseite (3) und einer Außenseite (4),
**dadurch gekennzeichnet, dass**
das Manschettenband (2) an seinem zweiten Ende (6) eine Führungsleine (7) und an seinem ersten Ende (5) auf der Außenseite (4) ein Verschlusselement (8) aufweist, welches mit der Innenseite (3) des Manschettenbandes (3) bei einer Überlappung an seinem ersten Ende (6) eine lösbare Verbindung (10) bildet, deren Scherfestigkeit um wenigstens eine Größenordnung höher ist als ihre Haftzugfestigkeit.

2. Zugmanschette nach Anspruch 1,
**dadurch gekennzeichnet, dass**
das Verschlusselement (8) ein flächiges Verschlusselement ist.

3. Zugmanschette nach einem der vorhergehenden Ansprüche,
**dadurch gekennzeichnet, dass**
das Verschlusselement (8) ein Klettelement zur Bildung eines Klettverschlusses, ein Magnetelement zur Bildung eines Magnetverschlusses und/oder eine Klebefläche aufweist, wobei die Innenseite (3) des Manschettenbandes (2) in dem zur Überlappung mit dem Verschlusselement (8) vorgesehene Bereich (B) zur Bildung des jeweiligen Verschlusses (10) ausgebildet ist.

4. Zugmanschette nach einem der vorhergehenden Ansprüche,
**dadurch gekennzeichnet, dass**
die Innenseite (3) des Manschettenbandes (2) in den zur Anlage an das Rotorblatt (20) vorgesehenen Bereichen wenigstens teilweise rutschhemmend ausgeführt ist.

5. Zugmanschette nach einem der vorhergehenden Ansprüche,
**dadurch gekennzeichnet, dass**
die Innenseite (3) in den zur Anlage an das Rotorblatt (20) vorgesehenen Bereichen einen oder mehrere Saugnäpfe aufweist.

6. Zugmanschette nach einem der vorhergehenden Ansprüche,
**dadurch gekennzeichnet, dass**
die Zugmanschette (1) ein quer zur Längsrichtung des Manschettenbandes (2) angeordnetes Rinnenelement (11) zum Aufschieben auf die Hinterkante (22) eines Rotorblatts (20) aufweist, welches derart vom ersten Ende (5) des Manschettenbandes (2) entfernt an dem Manschettenband (2) angeordnet ist, dass das erste Ende (5) des Manschettenbandes (2) bei Umwickeln eines Rotorblatts (20) mit auf die Hinterkante (22) des Rotorblattes (20) aufgesteckten Rinnenelement (11) im Bereich der Vorderkante (21) des Rotorblatts (20) angeordnet ist.

7. Zugmanschette nach einem der vorhergehenden Ansprüche,
**dadurch gekennzeichnet, dass**
das Manschettenband (2) aus gewebeverstärkter Plane, Folie, Leder, Segeltuch oder einer Kombination dieser Materialen ist und vorzugsweise mit Gurten aus textilen Werkstoffen, Verbundwerkstoffen oder Metall verstärkt ist.

8. Verfahren zur Verwendung einer Zugmanschette (1) gemäß einem der Ansprüche 1 bis 7, wobei
- die Zugmanschette (1) derart an dem Rotorblatt (20) einer Windenergieanlage befestigt ist, dass die lösbare Verbindung (10) im Bereich der Vorderkante (21) des Rotorblatts (20) angeordnet ist,
- zum Aufbringen von Kräften auf das Rotorblatt (20) über die Führungsleine (7) Zugkräfte bis zu einer vorgegebenen maximalen Zugkraft nur in eine Richtung innerhalb eines Betriebswinkelbereichs (12) gegenüber der Profilsehne (23) des Rotorblatts (20) aufgebracht werden, in der die, durch die bei dieser Zugrichtung die lösbare Verbindung (10) bildenden Bereiche des Verschlusselements (8) erreichte Scherfestigkeit größer ist als die maximale Zugkraft, und
- zum Lösen der Zugmanschette (1) vom Rotorblatt (20) über die Führungsleine (7) eine Zugkraft kleiner als die vorgegebene maximale Zugkraft in eine Zugrichtung außerhalb des Betriebswinkelbereichs (12) aufgebracht wird, sodass die Haftzugfestigkeit zumindest des der Führungsleine (7) nächstliegenden Bereichs der lösbaren Verbindung (10) überschritten wird.

9. Verfahren nach Anspruch 8,
**dadurch gekennzeichnet, dass**
zum Erreichen einer Zugrichtung außerhalb des Betriebswinkelbereichs (12) der Einstellwinkel des Rotorblatts (20) verstellt wird.

10. Verfahren nach Anspruch 8 oder 9,
**dadurch gekennzeichnet, dass**
der Betriebswinkelbereich (12) derart vorgegeben ist, dass sich beim Aufbringen einer Zugkraft über die Führungsleine (7) in wenigstens einem Bereich des Verschlusselementes (8) eine Klemmwirkung zwischen dem Rotorblatt (20) und dem das Verschlusselement (8) überlappenden Bereich (B) des Manschettenbandes (2) ergibt.

11. Verfahren nach einem der Ansprüche 8 bis 10,
**dadurch gekennzeichnet, dass**
die Zugmanschette (1) in einem Bereich von 90% der Blattlänge ausgehend von der Blattwurzel eines Rotorblattes (20) angeordnet ist.

12. Verfahren nach einem der Ansprüche 8 bis 11,
**dadurch gekennzeichnet, dass**
die Zugmanschette (1) in einem Bereich des Rotorblattes (20) angeordnet ist, der frei von aerodynamischen Anbauteilen an der Rotorblattoberfläche ist.

## Claims

1. Pulling sleeve (1) for rotor blades (20) of a wind turbine, having a flexible sleeve band (2) for winding around a rotor blade (20), which sleeve band has an inner side (3) and an outer side (4),
**characterized in that**
the sleeve band (2) has a guiding line (7) at its second end (6) and has a fastener element (8) at its first end (5) on the outer side (4), said fastener element forming with the inner side (3) of the sleeve band (3), when overlapping at the first end (6) of the latter, a releasable connection (10) whose shear strength is higher than its tensile bonding strength by at least one order of magnitude.

2. Pulling sleeve according to Claim 1,
**characterized in that**
the fastener element (8) is a planar fastener element.

3. Pulling sleeve according to either of the preceding claims,
**characterized in that**
the fastener element (8) has a hook-and-loop element for forming a hook-and-loop fastening, a magnet element for forming a magnetic fastening and/or an adhesive surface, wherein, in the region (B) intended for the overlap with the fastener element (8), the inner side (3) of the sleeve band (2) is designed for the formation of the respective fastening (10).

4. Pulling sleeve according to one of the preceding claims,
**characterized in that**,
in the regions intended for abutment against the rotor blade (20), the inner side (3) of the sleeve band (2) is at least partially of slip-resistant design.

5. Pulling sleeve according to one of the preceding claims,
**characterized in that**,
in the regions intended for abutment against the rotor blade (20), the inner side (3) has one or more suction cups.

6. Pulling sleeve according to one of the preceding claims,
**characterized in that**
the pulling sleeve (1) has a groove element (11) which is arranged transversely to the longitudinal direction of the sleeve band (2) and which serves for being pushed onto the trailing edge (22) of a rotor blade (20) and which is arranged on the sleeve band (2) at a distance from the first end (5) of the sleeve band (2) in such a way that the first end (5) of the sleeve band (2), when wound around a rotor blade (20) with the groove element (11) plugged onto the trailing edge (22) of the rotor blade (20), is arranged in the region of the leading edge (21) of the rotor blade (20).

7. Pulling sleeve according to one of the preceding claims,
**characterized in that**
the sleeve band (2) is composed of fabric-reinforced tarpaulin, sheeting, leather, canvas or a combination of these materials and is preferably reinforced with straps composed of textile materials, composite materials or metal.

8. Method for using a pulling sleeve (1) according to one of Claims 1 to 7, wherein
- the pulling sleeve (1) is fastened to the rotor blade (20) of a wind turbine in such a way that the releasable connection (10) is arranged in the region of the leading edge (21) of the rotor blade (20),
- for applying forces to the rotor blade (20) via the guiding line (7), pulling forces up to a predefined maximum pulling force are applied only in a direction within an operating angle range (12) in relation to the profile chord (23) of the rotor blade (20), in which the shear strength achieved by those regions of the fastener element (8) which form the releasable connection (10) in this pulling direction is larger than the maximum pulling force, and
- for releasing the pulling sleeve (1) from the rotor blade (20) via the guiding line (7), a pulling force smaller than the predefined maximum pulling force is applied in a pulling direction outside the operating angle range (12) such that the tensile bonding strength at least of that region of the releasable connection (10) which is closest to the guiding line (7) is exceeded.

9. Method according to Claim 8,
**characterized in that**,
for the purpose of achieving a pulling direction outside the operating angle range (12), the pitch angle of the rotor blade (20) is adjusted.

10. Method according to Claim 8 or 9,
**characterized in that**
the operating angle range (12) is predefined in such a way that application of a pulling force via the guiding line (7), in at least one region of the fastener element (8), gives rise to a clamping action between the rotor blade (20) and that region (B) of the sleeve band (2) which overlaps the fastener element (8).

11. Method according to one of Claims 8 to 10,
**characterized in that**
the pulling sleeve (1) is arranged in a region of 90% of the blade length, proceeding from the blade root of a rotor blade (20).

12. Method according to one of Claims 8 to 11,
**characterized in that**
the pulling sleeve (1) is arranged in a region of the rotor blade (20) that is free of aerodynamic attachment parts on the rotor blade surface.

## Revendications

1. Manchon de traction (1) destiné à des pales de rotor (20) d'une éolienne, le manchon de traction comprenant une bande de manchon flexible (2) destinée à s'enrouler autour d'une pale de rotor (20) et pourvue d'un côté intérieur (3) et d'un côté extérieur (4),
**caractérisé en ce que**
la bande de manchon (2) comporte à sa deuxième extrémité (6) une ligne de guidage (7) et à sa première extrémité (5), du côté extérieur (4), un élément de fermeture (8) qui forme avec le côté intérieur (3) de la bande de manchon (3), en cas de recouvrement à sa première extrémité (6), une liaison amovible (10) dont la résistance au cisaillement est supérieure d'au moins un ordre de grandeur à sa résistance à la traction adhésive.

2. Manchon de traction selon la revendication 1,
**caractérisé en ce que**
l'élément de fermeture (8) est un élément de fermeture sensiblement bidimensionnel.

3. Manchon de traction selon l'une des revendications précédentes,
**caractérisé en ce que**
l'élément de fermeture (8) comporte un élément auto-agrippant destiné à former une fermeture auto-agrippante, un élément magnétique destiné à former une fermeture magnétique et/ou une surface adhésive, le côté intérieur (3) de la bande de manchon (2) étant formé dans la zone (B), prévue pour recouvrir l'élément de fermeture (8), afin de former la fermeture respective (10).

4. Manchon de traction selon l'une des revendications précédentes,
**caractérisé en ce que**
le côté intérieur (3) de la bande de manchon (2) est au moins partiellement antidérapant dans les zones prévues pour le contact avec la pale de rotor (20).

5. Manchon de traction selon l'une des revendications précédentes,
**caractérisé en ce que**
le côté intérieur (3) comporte une ou plusieurs ventouses dans les zones prévues pour le contact avec la pale de rotor (20).

6. Manchon de traction selon l'une des revendications précédentes,
**caractérisé en ce que**
le manchon de traction (1) comporte un élément formant goulotte (11) disposé transversalement à la direction longitudinale de la bande de manchon (2) et destiné à coulisser sur le bord arrière (22) d'une pale de rotor (20), qui est ainsi disposée sur la bande de manchon (2) à distance de la première extrémité (5) de la bande de manchon (2) de telle sorte que la première extrémité (5) de la bande de manchon (2) soit disposée dans la zone du bord avant (21) de la pale de rotor (20) lors de l'enroulement autour d'une pale de rotor (20) avec un élément formant goulotte (11) fixé au bord arrière (22) de la pale de rotor (20).

7. Manchon de traction selon l'une des revendications précédentes,
**caractérisé en ce que**
la bande de manchon (2) est formée d'une bâche renforcée de tissu, d'une feuille, de cuir, de toile ou d'une combinaison de ces matériaux et est de préférence renforcée par des sangles en matériaux textiles, en matériaux composites ou en métal.

8. Procédé d'utilisation d'un manchon de traction (1) selon l'une des revendications 1 à 7,
- le manchon de traction (1) étant fixé à la pale de rotor (20) d'une centrale éolienne de telle sorte que la liaison amovible (10) soit disposée dans la zone du bord avant (21) de la pale de rotor (20),
- pour appliquer des forces à la pale de rotor (20) par le biais de la ligne de guidage (7), des forces de traction allant jusqu'à une force de traction maximale spécifiée étant appliquées dans une seule direction dans une plage angulaire de fonctionnement (12) par rapport à la corde (23) de la pale de rotor (20), dans laquelle la résistance au cisaillement obtenue par les zones de l'élément de fermeture (8) qui forment la liaison amovible (10) dans cette direction de traction est supérieure à la force de traction maximale, et
- pour libérer le manchon de traction (1) de la pale de rotor (20) par le biais de la ligne de guidage (7), une force de traction inférieure à la force de traction maximale spécifiée étant appliquée dans une direction de traction à l'extérieur de la plage angulaire de fonctionnement (12) de sorte que la résistance à la traction adhésive au moins de la zone de la liaison amovible (10), qui est la plus proche de la ligne de guidage (7), soit dépassée.

9. Procédé selon la revendication 8,
**caractérisé en ce que**
l'angle de réglage de la pale de rotor (20) est ajusté de manière à atteindre une direction de traction à l'extérieur de la plage angulaire de fonctionnement (12).

10. Procédé selon la revendication 8 ou 9,
**caractérisé en ce que**
la plage angulaire de fonctionnement (12) est spécifiée de sorte que, lorsqu'une force de traction est appliquée par le biais de la ligne de guidage (7) dans au moins une zone de l'élément de fermeture (8), un effet de serrage est obtenu entre la pale de rotor (20) et la zone (B) de la bande de manchon (2) qui recouvre l'élément de fermeture (8) .

11. Procédé selon l'une des revendications 8 à 10,
**caractérisé en ce que**
le manchon de traction (1) est disposé dans une zone de 90 % de la longueur de pale à partir du pied d'une pale de rotor (20).

12. Procédé selon l'une des revendications 8 à 11,
**caractérisé en ce que**
le manchon de traction (1) est disposé dans une zone de la pale de rotor (20) qui est dépourvue de composants aérodynamiques à rajouter sur la surface de pale de rotor.
